# EUROPEAN PATENT SPECIFICATION

(11) **EP 1 027 684 B1**
(45) Date of publication and mention of the grant of the patent: **22.02.2006**
(21) Application number: 98952759.3
(22) Date of filing: 29.10.1998
(51) Int. Cl.: G07F 7/00, H04M 11/00, H04M 3/42

(54) **METHOD AND SYSTEM FOR PROVIDING A SERVICE**
VERFAHREN UND SYSTEM ZUR BEREITSTELLUNG VON DIENSTLEISTUNGEN
MéTHODE ET SYSTèME DE FOURNITURE DE SERVICES

(30) Priority: 29.10.1997 FI 970473 U; 12.06.1998 FI 981370
(43) Date of publication of application: 16.08.2000
(73) Proprietor: TeliaSonera Finland Oyj, 00510 Helsinki (FI)
(72) Inventor: STEWEN, Teemu, FIN-00051 Sonera (FI); VIHINEN, Seppo, FIN-00051 Sonera (FI)
(74) Representative: Simmelvuo, Markku Kalevi
(86) International application number: PCT/FI1998/000843
(87) International publication number: WO 1999/022346

(56) References cited:
- EP-A- 0 781 059
- WO-A1-96/13949
- WO-A1-97/30543
- JP-A- 8 249 530
- PATENT ABSTRACTS OF JAPAN; & JP 8249530 A (SANYO ELECTRIC CO LTD) 27 Sept. 1996.
- PATENT ABSTRACTS OF JAPAN; & JP 10149400 A (HITACHI LTD) 2 June 1998.
- NY TEKNIK, Volume 98/36, 1998, J. MELLIN, "Betala Lasken pa Telefonrakningen", page 11.
- PATENT ABSTRACTS OF JAPAN; & JP 8227478 A (HIROSE FUMITADA) 3 Sept. 1996.
- PATENT ABSTRACTS OF JAPAN; & JP 4015785 A (FUJI ELECTRIC CO LTD) 21 January 1992.

## Description

The present invention relates to a method as defined in the preamble of claim 1 and a system as defined in the preamble of claim 9 for providing a product or service in a telecommunication system. In the method and system of the invention, a terminal device in a telecommunication network is used as a means of payment for various purchases made through automatic delivery apparatus. A calling subscriber communicates by means of a first terminal device in the telecommunication network with a second terminal device in the telecommunication network via at least one, preferably specially priced service number included in an intelligent network, the subscription to be charged for use of the service being the calling subscription.

In prior art, various specially priced service numbers provided in a telecommunication network which are common to all callers, such as e.g. numbers beginning with 0600 or 0700, are known. However, such service numbers, so-called B-numbers, are not actual subscriber numbers but the switch and exchange system of the telecommunication network connects the calling subscriber's calls to the actual subscriber numbers, so-called C-numbers behind the service numbers. This type of solutions are typically implemented by utilising an intelligent network.

Previously known are also solutions in which mobile stations are used in various payment systems in electric payment applications. However, no prior-art solution is known in which a customer could use a mobile station as a means of payment to pay for different commodities, such as beverages, sweets, tobacco, tickets and equivalent, bought through a vending machine. So far, the user of a mobile station has not been able to control the operation of an automatic service apparatus by means of his/her mobile station.

In the methods mentioned above, the problem is that the user of the automatic apparatus does not necessarily have any cash or coins of suitable value, so in this case it would be practical to pay for vendor purchases e.g. by means of a mobile telephone. Furthermore, in prior-art automated services it has not been possible to define the user group for which the automatic apparatus is intended, but instead anyone has been allowed to use it.

Document JP 8249530 (D1) discloses a method for providing a service in a telecommunication system. D1 teaches that a call originating source identification information (such as a telephone number), the calling information of the designated automatic vending machine and commodity selection information can be transmitted from a mobile telephone through a communication line to an automatic vending machine. In D1 the identification number of the vending machine is dialed in a direct mode or via a relay center. In D1 a user must know both the identification of the automatic apparatus and the identification of the desired product beforehand to order it. The user places a call directly to the automatic apparatus and selects the desired product. Billing in D1 is arranged so that the vending machine transmits the charging information of the ejected commodity and the call originating source identification information to a charge collecting means. Based on the transmitted charging information and call originating source identification information, the charge collecting means collects the charge from the call originating source information (such as the owner of the mobile telephone) in a post-payment system.

The object of the present invention is to eliminate the drawbacks described above.

A specific object of the present invention is to disclose a new type of method and system in which a customer's terminal device, preferably a mobile station connected to a telecommunication network functions as a means of payment for various purchases made through a vending machine. A further object of the invention is to create a method and system in which optional, predetermined actions related to an automated service are carried out by means of a mobile station and a control unit of the automatic apparatus and of the mobile station, placed in the automatic apparatus, in accordance with instructions given by the customer via his/her mobile station.

As for the features characteristic of the invention, reference is made to the claims.

According to a first aspect of the invention there is provided a system for providing a product or service ordered by a calling subscriber from an automatic apparatus by means of a first terminal device in a telecommunication system. The telecommunication system comprises the first terminal device, a control centre comprising means for handling short messages and/or data calls, the automatic apparatus comprising a second terminal device and a control unit connected to it. The telecommunication system further comprises a telecommunication network comprising an intelligent network, the intelligent network containing means for determining charge and location data of the first terminal device and producing voice messages. The telecommunication system further comprises a first telecommunication connection and a second telecommunication connection, the first terminal device and the second terminal device as well as the control centre being connected to the telecommunication network. The first terminal device sets up the first telecommunication connection with a called subscriber number.

The system of the invention comprises means for directing the first telecommunication connection to the intelligent network, wherein a dialled service number indicates the desired product or service. The intelligent network comprises means for determining charge data based on the first telecommunication connection. Furthermore, the system comprises means for setting up the second telecommunication connection based on the location data of the first terminal device and the dialled service number from the intelligent network to the second terminal device. The control unit comprises means for controlling the automatic service apparatus on the basis of the second telecommunication connection and an operational state of the automatic apparatus.

Moreover, the intelligent network is provided with means for directing a call to the automatic apparatus nearest to the terminal device. In addition, means comprised in the intelligent network can be used to give the calling subscriber a voice message about the condition of the automatic apparatus and determine charge data regarding the call.

Moreover, the control unit comprises means for setting the terminal device contained in the automatic apparatus to a "busy" or "no answer" state and, when necessary, shutting off the terminal device. The control unit is e.g. a computer or microcontroller.

According to a second aspect of the invention there is provided a method for providing a product or service ordered by a calling subscriber from an automatic apparatus by means of a first terminal device in a telecommunication system. The telecommunication system comprises the first terminal device, a control centre comprising means for handling short messages and/or data calls. The automatic apparatus comprises a second terminal device and a control unit connected to it. The telecommunication system further comprises a telecommunication network comprising an intelligent network, the intelligent network containing means for determining charge and location data of the first terminal device and producing voice messages, a first telecommunication connection and a second telecommunication connection. The first terminal device and the second terminal device as well as the control centre are connected to the telecommunication network. In the method the first telecommunication connection is set up with a called subscriber number.

In the method of the invention, the first telecommunication connection is directed to the intelligent network, wherein a dialled service number indicates the desired product or service. Charge data is determined in the intelligent network based on the first telecommunication connection and the second telecommunication connection is set up based on the location data of the first terminal device and the dialled service number from the intelligent network to the second terminal device. The automatic apparatus is controlled by means of the control unit on the basis of the second telecommunication connection and an operational state of the automatic apparatus.

The automatic apparatus is controlled by means of a control unit on the basis of the second telecommunication connection and the state of the automatic apparatus, as follows:
- If the automatic apparatus has run out of the product ordered and/or the service is busy, then the control unit sets the second terminal device into a "busy" or "no answer" state and the user of the first terminal device is informed about the state of the automatic apparatus by means of a voice message sent over the first telecommunication connection.
- If the automatic apparatus has run out of all products or all services are busy, then the control unit shuts off the second terminal device, and the user of the first terminal device is informed about the state of the automatic apparatus as above.
- If there is a malfunction in the automatic service apparatus, then the control unit sets the second terminal device into a "busy" or "no answer" state, and the user of the first terminal device is informed about the state of the automatic apparatus as above.

Furthermore, in the method and system of the invention, the location of the calling subscriber can be determined on the basis of the location data of the first terminal device and a second telecommunication connection can be set up with another terminal device nearest to the calling subscriber. The user group accessing the automatic apparatus can also be limited by identifying the calling subscription and checking that the calling subscriber has an access right to the products and/or services determined by the called subscription.

Information about the state of the automatic apparatus can also be transmitted to a service centre by sending a status inquiry message from the service centre to the second terminal device, whereupon the automatic apparatus sends the information to the service centre. The automatic apparatus may inform the service centre e.g. when the automatic apparatus has run out of a product or has a malfunction. Sending information regarding the state of the automatic apparatus to the service centre allows easier maintenance and filling of the automatic apparatus as it makes it unnecessary to separately inspect each apparatus on its physical location. The transmission of the status data is effected using a data or text message connection.

The method and system of the invention provide a reliable and fast solution for paying for vendor purchases by means of a terminal device in a telecommunication network. An advantage for the user is that he/she is able to operate the automatic apparatus by means of his/her mobile telephone and activate the automatic apparatus to perform predetermined operations relating to the service, e.g. by simply calling an optional service number. Thus, the mobile station functions as a kind of remote controller of the automatic apparatus. This means that the user does not need to have any cash with him/her because the charges for the selected automated services are included in the telephone bill for the mobile subscription in question.

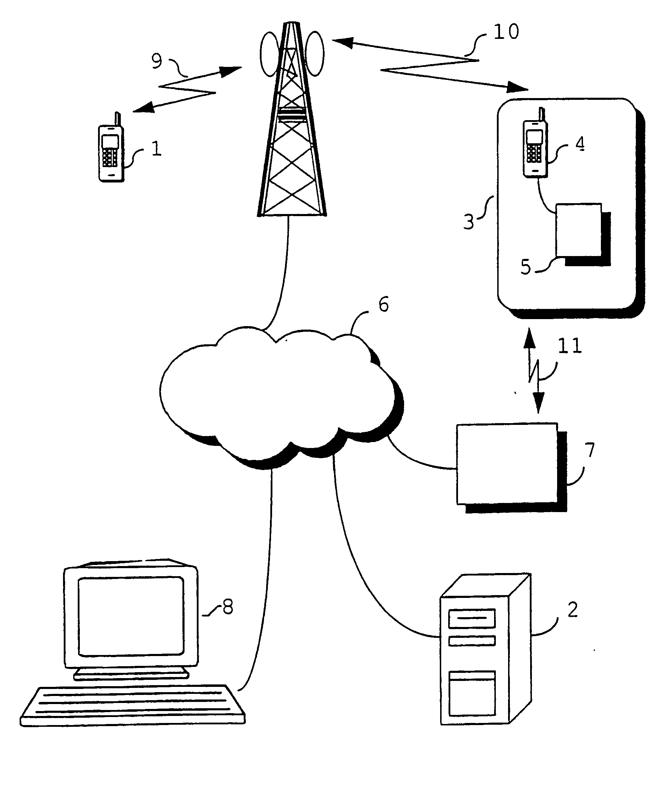

In the following, the invention will be described in detail by referring to the attached drawings, wherein Fig. 1 presents a system according to the invention.

The system presented in Fig. 1 comprises a first terminal device 1, a control centre 2 provided with means for handling short messages and/or data calls, an automatic apparatus 3 comprising a second terminal device 4 and a control unit 5 connected to it, a telecommunication network 6 comprising an intelligent network 7, said intelligent network containing means 8 for determining charge and location data and producing voice messages, a first telecommunication connection 9 and a second telecommunication connection 10.

In a preferred embodiment of the method and system of the invention, the calling subscriber communicates via a first terminal device 1 with a second terminal device 4 over the telecommunication network 6. In Fig. 1, the first terminal device 1 in the telecommunication network 6 is a mobile station and the second terminal device 4 in the telecommunication network is also a mobile station. To use the payment system of the invention, the calling subscriber dials on his/her mobile station 1 a specially priced service number, e.g. a number beginning with the digits 0700. The call is directed via the mobile communication network 6 to the intelligent network 7. After this, a number conversion is carried out by performing certain known actions, whereupon the call is directed to the mobile station 4 comprised in the automatic apparatus 3. In other words, the call is connected to a so-called C-number. It is to be noted that, if desirable, a connection with the mobile station 4 in the automatic apparatus 3 can be set up via several different numbers. Differently priced service numbers are thus used to implement billing for differently priced products.

Further, a billing ticket is generated on the basis of the call, the subscription to be charged being the calling subscription. In a preferred case, an intelligent network exchange comprised in the intelligent network 7 takes care of the charging for the call and directing the call to the mobile station 4 in the automatic apparatus 3. This kind of operations based on number conversions in an intelligent network are known to the person skilled in the art and are therefore not described in detail in this context. A more detailed presentation of intelligent networks can be found e.g. in ITU-T recommendations Q.121X or in Bellcore AIN recommendations.

In the invention, the essential point is the operation of the mobile station 4 placed in the automatic apparatus 3 and especially the control unit 5 comprised in the automatic apparatus. In a preferred case, the control unit 5 communicates with both the automatic apparatus 3 and the mobile station 4 in the automatic apparatus 3 and controls their operation. The communication between the control unit 5 and the automatic apparatus 7 can be advantageously implemented in the following ways:
- emulation of a coin-operated lock, i.e. the control unit simulates a coin-operated lock by giving the automatic apparatus signals corresponding to a coin-operated lock e.g. via a relay switch or equivalent;
- card reader emulation dialogue with the central processing unit of the automatic apparatus; and/or
- user emulation, i.e. pressing option buttons provided in the automatic apparatus and reading the switches to obtain relevant information e.g. when the automatic apparatus runs out of a product.

The communication between the control unit 5 and the mobile station 4 in the automatic apparatus 3 is preferably implemented using a series protocol. In a preferred embodiment of the present invention, the telephone in the automatic apparatus is a Siemens Ml, which uses the expanded AT command language. However, many other alternatives regarding the terminal device and the command language are possible. The communication usually comprises e.g. the following actions:
- answering the call or leaving it unanswered, which can be done either using a voice prompt, in which case the telephone is connected to an answering machine, or using a signal tone, in which case it is possible to utilise the modem answer-back tone obtained in data and telefax connections;
- information regarding connection of the call e.g. to ensure correct billing;
- disconnection of the call upon the lapse of a certain length of time;
- optional calling subscriber identification;
- pretending to be busy; and/or
- quitting the network.

Thus, the control unit 5 monitors and controls the mobile station 4 and the automatic apparatus 3. If desirable, the control unit 5 only answers a call if the automatic apparatus 3 is able to carry out the actions selected. The mobile station 4 may also pretend to be busy, quit the network altogether (switching off of power to the mobile station) and/or report an error situation. After carrying out the function, the control unit 5 releases the call to free the line. The control unit 5 in the automatic apparatus 3 is e.g. a computer, microcontroller or a similar electronics unit, which matches the mobile station 4 with the automatic apparatus 3 and activates the automatic apparatus 3 so that it will perform the predetermined actions comprised in the service. The control unit 5 preferably transmits control data to the automatic apparatus 3 on the basis of the number dialled by the calling subscriber and carries out the operations mentioned.

The automatic apparatus 3 is e.g. a jukebox or an apparatus for selling drinks and/or tickets. The automatic apparatus 3 may be even a device controlling a barrier at the gate of a parking area. In principle, this may be any automatic apparatus providing commodities, such as articles and services.. E.g. in the case of a jukebox, when a customer makes a call from his/her terminal device 1 to the number corresponding to the automated service, the control unit 5 activates the jukebox so as to make it play the music selected by the customer. Thus, the customer need not insert any money into the automatic apparatus 3, but instead the bill for the automated service is included in the telephone bill for the calling subscription concerned.

It is also possible to include an IVR (Interactive Voice Response) functionality in the payment system of the invention, in which case the IVR system may ask the user which product he/she wants. The user gives the answer in the form of DTMF (Dual Tone MultiFrequency) tone signals via his/her mobile station 1, whereupon the call is directed to the terminal device 4 in the automatic apparatus 3 and the metering pulses are transmitted to the intelligent network system 7. IVR can be used to give the prompts if this function is missing in the automatic apparatus 3.

In an embodiment of the payment system of the invention, a connection with the automatic apparatus 3 can be set up e.g. by calling the mobile station 4 in the automatic apparatus 3 via several different service numbers to order different / differently priced products. The payment system can utilise e.g. the voice, data and fax numbers of a GSM (Global System for Mobile Communications) telephone, permitting several calls to be logically connected to the telephone in the automatic apparatus one at time. In the control unit, the incoming data numbers and fax numbers are interpreted on the basis of their type (fax, data 9600, data 4800, and so on) as differently priced calls. The actual tasks of determining the price and directing the calls to the numbers in question are performed in the intelligent network 7. Alternatively, it is possible to make use of the calling subscriber number identification feature of the GSM telephone so that different numbers are directed in the intelligent network system 7 or IVR via a physically or logically different line, i.e. calling subscriber number, to the automatic apparatus, thus enabling the automatic apparatus to determine the call price on the basis of the calling subscriber number.

As for other embodiments of the invention, let it be stated that instead of a mobile station 4 the automatic apparatus 3 can also be provided with an optional special device designed for wireless data transmission, such as a wireless modem. If necessary, the service can also be allowed e.g. for wired-network telephones. In any case, the basic idea of the invention is that the mobile station 1 is for the customer a personal payment terminal which is used in front of the automatic apparatus 3 as a kind of remote control device.

Moreover, in the payment system of the invention it is possible to make effective use of many additional features of the telecommunication network 6, such as area control and/or location data, in which case a given telephone number only works in a certain part of the country in the vicinity of the automatic apparatus 3. This makes it possible to eliminate unnecessary calls to a wrong number. Area control also permits use of the same number e.g. in two or more areas.

If necessary, specific user groups can be defined. This is a useful function e.g. in an application for opening a garage door. In this case, the automatic apparatus 3 checks the calling number e.g. against a special service-specific list of allowed callers.

The invention is not restricted to the examples of its embodiments described above, but many variations are possible within the scope of the inventive idea defined by the claims.

## Claims

1. Method for providing a product or service ordered by a calling subscriber from an automatic apparatus (3) by means of a first terminal device (1) in a telecommunication system, said telecommunication system comprising said first terminal device (1), a control centre (2) comprising means for handling short messages and/or data calls, said automatic apparatus (3) comprising a second terminal device (4) and a control unit (5) connected to it, a telecommunication network (6) comprising an intelligent network (7), said intelligent network containing means (8) for determining charge and location data of the first terminal device (1) and producing voice messages, a first telecommunication connection (9) and a second telecommunication connection (10), said first terminal device (1) and said second terminal device (4) as well as said control centre (2) being connected to said telecommunication network (6), and in which method said first telecommunication connection (9) is set up with a called subscriber number,
directing the first telecommunication connection to the intelligent network, wherein a dialled service number indicates the desired product or service;
determining charge data in the intelligent network (7) based on the first telecommunication connection;
setting up the second telecommunication connection (10) based on the location data of the first terminal device (1) and the dialled service number from the intelligent network (7) to the second terminal device (4); and
controlling the automatic apparatus (3) by means of the control unit (5) on the basis of the second telecommunication connection (10) and an operational state of the automatic apparatus (3).

2. Method as defined in claim 1, whereby, if the automatic apparatus has run out of the product ordered or the service is busy, then
the control unit (5) sets the second terminal device into a "busy" or "no answer" state; and
the user of the first terminal device (1) is informed about the state of the automatic service apparatus (3) by means of a voice message sent over the first telecommunication connection (9).

3. Method as defined in claim 1 and 2, whereby, if the automatic service apparatus (3) has run out of all products or all services are busy, then
the control unit shuts (5) off the second terminal device (4); and
the user of the first terminal device (1) is informed about the state of the automatic service apparatus (3) by means of a voice message sent over the first telecommunication connection (9).

4. Method as defined in claims 1 - 3, whereby, if there is a malfunction in the automatic service apparatus, then
the control unit (5) sets the second terminal device (4) into a "busy" or "no answer" state; and
the user of the first terminal device (1) is informed about the state of the automatic service apparatus (3) by means of a voice message sent over the first telecommunication connection (9).

5. Method as defined in any one of claims 1 - 4, whereby
the location of the calling subscriber is determined on the basis of the location data of the first terminal device (1); and
a second telecommunication connection (10) with another terminal device (4) located nearest to the calling subscriber is set up.

6. Method as defined in any one of claims 1 - 5, whereby the calling subscription is identified and the calling subscriber's access right to the products and/or services determined by the called subscription is verified.

7. Method as defined in any one of claims 1 - 6, whereby information about the state of the automatic apparatus (3) is transmitted to the control centre (2) if
a status inquiry message is sent from the control centre (3) to the second terminal device (5);
the automatic service apparatus has run out of a product, or
the automatic service apparatus has a malfunction.

8. Method as defined in any one of claims 1 - 7, whereby information regarding the state of the automatic apparatus (4) is sent to the service centre over a data or text message connection.

9. System for providing a product or service ordered by a calling subscriber from an automatic apparatus (3) by means of a first terminal device (1) in a telecommunication system, said telecommunication system comprising said first terminal device (1), a control centre (2) comprising means for handling short messages and/or data calls, said automatic apparatus (3) comprising a second terminal device (4) and a control unit (5) connected to it, a telecommunication network (6) comprising an intelligent network (7), said intelligent network containing means (8) for determining charge and location data of the first terminal device and producing voice messages, a first telecommunication connection (9) and a second telecommunication connection (10), said first terminal device (1) and said second terminal device (4) as well as said control centre (2) being connected to said telecommunication network (6), said first terminal device (1) setting up said first telecommunication connection (9) with a called subscriber number,
the system comprises means for directing the first telecommunication connection (9) to the intelligent network (7), wherein a dialled service number indicates the desired product or service;
the intelligent network (7) comprises means for determining charge data based on the first telecommunication connection (9);
the system comprises means for setting up the second telecommunication connection (10) based on the location data of the first terminal device (1) and the dialled service number from the intelligent network to the second terminal device (4); and
the control unit (5) comprises means for controlling the automatic service apparatus. (3) on the basis of the second telecommunication connection (10) and an operational state of the automatic apparatus (3).

10. System as defined in claim 9, whereby the control unit (5) comprises means for setting the second terminal device (4) to a "busy" or "no answer" state.

11. System as defined in claims 9 and 10, **characterised in that** the control unit (5) comprises means for shutting off the second terminal device (4).

12. System as defined in any one of claims 9 - 11, whereby the system comprises means for delivering a voice message about the state of the automatic service apparatus (3).

13. System as defined in any one of claims 9 - 12, whereby the system comprises means for determining location data for the calling subscriber on the basis of location data of the first terminal device (1).

14. System as defined in any one of claims 9 - 13, whereby the system comprises means for setting up a second telecommunication connection (10) with an automatic apparatus (3) nearest to the calling subscriber.

15. System as defined in any one of claims 9 - 14, whereby the second terminal device (4) comprises means for transmitting and receiving short messages and/or data calls.

16. System as defined in any one of claims 9 - 15, whereby the control unit (5) is a computer and/or microcontroller.

17. System as defined in any one of claims 9 - 16, whereby the first terminal device (1) is a mobile station.

18. System as defined in any one of claims 9 - 17, whereby the first terminal device (1) is a tone frequency telephone apparatus.

## Patentansprüche

1. Verfahren zum Bereitstellen eines Produkts oder einer Dienstleistung, welches oder welche von einem anrufenden Teilnehmer bei einer automatischen Vorrichtung (3) mittels eines ersten Endgeräts (1) in einem Telekommunikationssystem bestellt bzw. angefordert ist, wobei das Telekommunikationssystem Folgendes aufweist: ein erstes Endgerät (1), eine Leitstelle (2) mit Einrichtungen zur Handhabung von Kurzmitteilungen und/oder Datenrufen, wobei die automatische Vorrichtung (3) ein zweites Endgerät (4) und eine mit ihm verbundene Steuereinheit (5) aufweist, ein Telekommunikationsnetz (6) mit einem intelligenten Netzwerk (7), wobei das intelligente Netzwerk Einrichtungen (8) zur Festlegung von Kosten- und Standortdaten des ersten Endgeräts (1) und zur Erzeugung von Sprachmitteilungen aufweist, eine erste Telekommunikationsverbindung (9) und eine zweite Telekommunikationsverbindung (10), wobei das erste Endgerät (1) und das zweite Endgerät (4) sowie auch die Leitstelle (2) mit dem Telekommunikationsnetz (6) verbunden werden, und wobei in dem Verfahren die erste Telekommunikationsverbindung (9) mit einer angerufenen Teilnehmernummer eingerichtet wird, mit folgenden Verfahrensschritten:
Leiten der ersten Telekommunikationsverbindung zu dem intelligenten Netzwerk, wobei eine gewählte Servicenummer das gewünschte Produkt oder die gewünschte Dienstleistung angibt;
Festlegen von Kostendaten in dem intelligenten Netzwerk (7) auf Grundlage der ersten Telekommunikationsverbindung;
Einrichten der zweiten Telekommunikationsverbindung (10) auf Grundlage der Standortdaten des ersten Endgeräts (1) und der gewählten Servicenummer von dem intelligenten Netzwerk (7) zu dem zweiten Endgerät (4); und
Steuern der automatischen Vorrichtung (3) mittels der Steuereinheit (5) auf der Grundlage der zweiten Telekommunikationsverbindung (10) und eines Betriebszustands der automatischen Vorrichtung (3).

2. Verfahren nach Anspruch 1, wobei, wenn die automatische Vorrichtung kein bestelltes Produkt mehr vorrätig hat oder die Dienstleistung belegt ist,
die Steuereinheit (5) das zweite Endgerät in einen "Belegt-" oder "Keine-Antwort-Zustand" einstellt; und
der Nutzer des ersten Endgeräts (1) über den Zustand der automatischen Servicevorrichtung (3) mittels einer Sprachmitteilung informiert wird, welche über die erste Telekommunikationsverbindung (9) gesendet wird.

3. Verfahren nach Anspruch 1 oder 2, wobei, wenn die automatische Servicevorrichtung (3) von allen Produkten keinen Vorrat mehr hat oder alle Dienstleistungen belegt sind,
die Steuereinheit (5) das zweite Endgerät (4) ausschaltet; und
der Nutzer des ersten Endgeräts (1) über den Zustand der automatischen Servicevorrichtung (3) mittels einer Sprachmitteilung informiert wird, welche über die erste Telekommunikationsverbindung (9) gesendet wird.

4. Verfahren nach den Ansprüchen 1 bis 3, wobei, wenn in der automatischen Servicevorrichtung eine Fehlfunktion auftritt,
die Steuereinheit (5) das zweite Endgerät (4) in einen "Belegt-" oder "Keine-Antwort-Zustand" einstellt; und
der Nutzer des ersten Endgeräts (1) über den Zustand der automatischen Servicevorrichtung (3) mittels einer Sprachmitteilung informiert wird, welche über die erste Telekommunikationsverbindung (9) gesendet wird.

5. Verfahren nach einem der Ansprüche 1 bis 4, wobei
der Standort des anrufenden Teilnehmers auf der Grundlage der Standortdaten des ersten Endgeräts (1) bestimmt wird; und
eine zweite Telekommunikationsverbindung (10) mit einem anderen Endgerät (4) eingerichtet wird, welches in unmittelbarer Nähe des anrufenden Teilnehmers angeordnet ist.

6. Verfahren nach einem der Ansprüche 1 bis 5, wobei der anrufende Teilnehmeranschluss identifiziert wird und das Zugriffsrecht des anrufenden Teilnehmers auf die von dem anrufenden Teilnehmeranschluss festgelegten Produkte und/oder Dienstleistungen geprüft wird.

7. Verfahren nach einem der Ansprüche 1 bis 6, wobei Informationen über den Zustand der automatischen Vorrichtung (3) an die Leitstelle (2) übertragen werden, wenn eine Zustandsanforderungsnachricht von der Leitstelle (2) an das zweite Endgerät (4) gesendet wird;
die automatische Servicevorrichtung ein Produkt nicht mehr vorrätig hat; oder
die automatische Servicevorrichtung eine Fehlfunktion aufweist.

8. Verfahren nach einem der Ansprüche 1 bis 7, wobei Informationen den Zustand der automatischen Vorrichtung (3) betreffend an die Leitstelle über eine Daten- oder Textnachrichtenverbindung gesendet werden.

9. System zur Bereitstellung eines Produkts oder einer Dienstleistung, welches oder welche von einem anrufenden Teilnehmer bei einer automatischen Vorrichtung (3) mittels eines ersten Endgeräts (1) in einem Telekommunikationssystem bestellt bzw. angefordert ist, wobei das Telekommunikationssystem Folgendes aufweist: ein erstes Endgerät (1), eine Leitstelle (2) mit Einrichtungen zur Handhabung von Kurzmitteilungen und/oder Datenrufen, wobei die automatische Vorrichtung (3) ein zweites Endgerät (4) und eine mit ihm verbundene Steuereinheit (5) aufweist, ein Telekommunikationsnetz (6) mit einem intelligenten Netzwerk (7), wobei das intelligente Netzwerk Einrichtungen (8) zur Festlegung von Kosten- und Standortdaten des ersten Endgeräts und zur Erzeugung von Sprachmitteilungen aufweist, eine erste Telekommunikationsverbindung (9) und eine zweite Telekommunikationsverbindung (10), wobei das erste Endgerät (1) und das zweite Endgerät (4) sowie auch die Leitstelle (2) mit dem Telekommunikationsnetz (6) verbunden werden, wobei das erste Endgerät (1) die erste Telekommunikationsverbindung (9) mit einer angerufenen Teilnehmernummer eingerichtet,
wobei das System Einrichtungen zur Leitung der ersten Telekommunikationsverbindung (9) zu dem intelligenten Netzwerk (7) aufweist,
wobei eine gewählte Servicenummer das gewünschte Produkt oder die gewünschte Dienstleistung angibt;
wobei das intelligente Netzwerk (7) Einrichtungen zur Festlegung von Kostendaten auf Grundlage der ersten Telekommunikationsverbindung (9) aufweist;
wobei das System Einrichtungen zur Einrichtung der zweiten Telekommunikationsverbindung (10) auf Grundlage der Standortdaten des ersten Endgeräts (1) und der gewählten Servicenummer von dem intelligenten Netzwerk zu dem zweiten Endgerät (4) aufweist; und
die Steuereinheit (5) Einrichtungen zur Steuerung der automatischen Servicevorrichtung (3) auf der Grundlage der zweiten Telekommunikationsverbindung (10) und eines Betriebszustands der automatischen Vorrichtung (3) aufweist.

10. System nach Anspruch 9, wobei die Steuereinheit (5) Einrichtungen zur Einstellung des zweiten Endgeräts (4) in einen "Belegt-" oder "Keine-Antwort-Zustand" aufweist.

11. System nach Anspruch 9 oder 10, **dadurch gekennzeichnet, dass** die Steuereinheit (5) Einrichtungen zur Abschaltung des zweiten Endgeräts (4) aufweist.

12. System nach einem der Ansprüche 9 bis 11, wobei das System Einrichtungen zur Lieferung einer Sprachnachricht über den Zustand der automatischen Servicevorrichtung (3) aufweist.

13. System nach einem der Ansprüche 9 bis 12, wobei das System Einrichtungen zur Bestimmung von Standortdaten für den anrufenden Teilnehmer auf Grundlage von Standortdaten des ersten Endgeräts (1) aufweist.

14. System nach einem der Ansprüche 9 bis 13, wobei das System Einrichtungen zur Einrichtung einer zweiten Telekommunikationsverbindung (10) mit einer automatischen Vorrichtung (3) in unmittelbarer Nähe des anrufenden Teilnehmers aufweist.

15. System nach einem der Ansprüche 9 bis 14, wobei das zweite Endgerät (4) Einrichtungen zur Übertragung und zum Empfang von Kurzmitteilungen und/oder Datenrufen aufweist.

16. System nach einem der Ansprüche 9 bis 15, wobei die Steuereinheit (5) ein Computer und/oder ein Mikrokontroller ist.

17. System nach einem der Ansprüche 9 bis 16, wobei das erste Endgerät (1) eine Mobilstation ist.

18. System nach einem der Ansprüche 9 bis 17, wobei das erste Endgerät (1) ein Tonfrequenz-Telefongerät ist.

## Revendications

1. Procédé de fourniture d'un produit ou d'un service commandé par un abonné appelant à partir d'un appareil automatique (3) au moyen d'un premier dispositif formant terminal (1) dans un système de télécommunications, ledit système de télécommunication comprenant ledit premier dispositif formant terminal (1), un centre de commande (2) comprenant des moyens pour prendre en compte des messages courts et / ou des communications de données, ledit appareil automatique (3) comprenant un deuxième dispositif formant terminal (4) et une unité de commande (5) qui est connectée à lui, un réseau de télécommunications (6) comprenant un réseau intelligent (7), ledit réseau intelligent contenant des moyens (8) pour déterminer des données de charge et des données de position du premier dispositif formant terminal (1) et pour produire des messages vocaux, une première connexion de télécommunications (9) et une deuxième connexion de télécommunications (10), ledit premier dispositif formant terminal (1) et ledit deuxième dispositif formant terminal (4) ainsi que ledit centre de commande (2) étant connectés au dit réseau de télécommunications (6), et dans lequel procédé ladite première connexion de télécommunications (9) est établie avec un numéro d'abonné appelé ;
diriger la première connexion de télécommunications vers le réseau intelligent, dans lequel un numéro de service composé désigne le produit ou le service désirés ;
déterminer des données de charge dans le réseau intelligent (7) sur la base de la première connexion de télécommunications ;
établir la deuxième connexion de télécommunications (10) sur la base des données de position du premier dispositif formant terminal (1) et du numéro de service composé entre le réseau intelligent (7) et le deuxième dispositif formant terminal (4) ; et
commander l'appareil automatique (3) au moyen de l'unité de commande (5) sur la base de la deuxième connexion de télécommunications (10) et d'un état de fonctionnement de l'appareil automatique (3).

2. Procédé selon la revendication 1, selon lequel, si l'appareil automatique est à court du produit commandé ou que le service est occupé, alors,
l'unité de commande (5) définit le deuxième dispositif formant terminal à un état "occupé" ou de "non réponse" ; et
l'utilisateur du premier dispositif formant terminal (1) est informé de l'état de l'appareil de services automatique (3) au moyen d'un message vocal envoyé sur la première connexion de télécommunications (9).

3. Procédé selon la revendication 1 et 2, selon lequel, si l'appareil de services automatique (3) est à court de tous les produits proposés ou que tous les services sont occupés, alors,
l'unité de commande arrête (5) le deuxième dispositif formant terminal (4) ; et
l'utilisateur du premier dispositif formant terminal (1) est informé de l'état de l'appareil de services automatique (3) au moyen d'un message vocal envoyé sur la première connexion de télécommunications (9).

4. Procédé selon les revendications 1 à 3, selon lequel, en cas de dysfonctionnement de l'appareil de services automatique, alors,
l'unité de commande (5) définit le deuxième dispositif formant terminal (4) à un état "occupé" ou de "non réponse" ; et
l'utilisateur du premier dispositif formant terminal (1) est informé de l'état de l'appareil de services automatique (3) au moyen d'un message vocal envoyé sur la première connexion de télécommunications (9).

5. Procédé selon l'une quelconque des revendications 1 à 4, selon lequel
la position de l'abonné appelant est déterminée sur la base des données de position du premier dispositif formant terminal (1) ; et
une deuxième connexion de télécommunications (10) avec un autre dispositif formant terminal (4) situé plus près de l'abonné appelant, est établie.

6. Procédé selon l'une quelconque des revendications 1 à 5, selon lequel l'abonné appelant est identifié et le droit d'accès de l'abonné appelant aux produits et / ou aux services déterminés par l'abonné appelé est vérifié.

7. Procédé selon l'une quelconque des revendications 1 à 6, selon lequel des informations relatives à l'état de l'appareil automatique (3) sont transmises au centre de commande (2) si
un message de demande de statut est envoyé depuis le centre de commande (3) vers le deuxième dispositif formant terminal (5) ;
l'appareil de services automatique est à court d'un produit, ou bien
l'appareil de services automatique ne fonctionne pas correctement.

8. Procédé selon l'une quelconque des revendications 1 à 7, selon lequel des informations relatives à l'état de l'appareil automatique (4) sont envoyées vers le centre de services sur une connexion de données ou de message texte.

9. Système de fourniture d'un produit ou d'un service commandé par un abonné appelant à partir d'un appareil automatique (3) au moyen d'un premier dispositif formant terminal (1) dans un système de télécommunications, ledit système de télécommunication comprenant ledit premier dispositif formant terminal (1), un centre de commande (2) comprenant des moyens pour prendre en compte des messages courts et / ou des communications de données, ledit appareil automatique (3) comprenant un deuxième dispositif formant terminal (4) et une unité de commande (5) qui est connectée à lui, un réseau de télécommunications (6) comprenant un réseau intelligent (7), ledit réseau intelligent contenant des moyens (8) pour déterminer des données de charge et des données de position du premier dispositif formant terminal et pour produire des messages vocaux, une première connexion de télécommunications (9) et une deuxième connexion de télécommunications (10), ledit premier dispositif formant terminal (1) et ledit deuxième dispositif formant terminal (4) ainsi que ledit centre de commande (2) étant connectés au dit réseau de télécommunications (6), ledit premier dispositif formant terminal (1) établissant ladite première connexion de communications (9) avec un numéro d'abonné appelé ;
le système comprend des moyens pour diriger la première connexion de télécommunications (9) vers le réseau intelligent (7), dans lequel un numéro de service composé désigne le produit ou le service désirés ;
le réseau intelligent (7) comprend des moyens pour déterminer des données de charge sur la première connexion de télécommunications (9) ;
le système comprend des moyens pour établir la deuxième connexion de télécommunications (10) sur la base des données de position du premier dispositif formant terminal (1) et du numéro de service composé entre le réseau intelligent et le deuxième dispositif formant terminal (4) ; et
l'unité de commande (5) comprend des moyens pour commander l'appareil de services automatique (3) sur la base de la deuxième connexion de télécommunications (10) et d'un état de fonctionnement de l'appareil automatique (3).

10. Système selon la revendication 9, selon lequel l'unité de commande (5) comprend des moyens pour définir le deuxième dispositif formant terminal (4) à un état "occupé" ou de "non réponse".

11. Système selon les revendications 9 et 10, **caractérisé en ce que** l'unité de commande (5) comprend des moyens pour arrêter le deuxième dispositif formant terminal (4).

12. Système selon l'une quelconque des revendications 9 à 11, selon lequel le système comprend des moyens pour délivrer un message vocal à propos de l'état de l'appareil de services automatique (3).

13. Système selon l'une quelconque des revendications 9 à 12, selon lequel le système comprend des moyens pour déterminer des données de position pour l'abonné appelant sur la base de données de position du premier dispositif formant terminal (1).

14. Système selon l'une quelconque des revendications 9 à 13, selon lequel le système comprend des moyens pour établir une deuxième connexion de télécommunications (10) avec un appareil automatique (3) situé plus près de l'abonné appelant.

15. Système selon l'une quelconque des revendications 9 à 14, selon lequel le deuxième dispositif formant terminal (4) comprend des moyens pour transmettre et recevoir des messages courts et / ou des communications de données.

16. Système selon l'une quelconque des revendications 9 à 15, selon lequel l'unité de commande (5) est un ordinateur et / ou un microcontrôleur.

17. Système selon l'une quelconque des revendications 9 à 16, selon lequel le premier dispositif formant terminal (1) est une station mobile.

18. Système selon l'une quelconque des revendications 9 à 17, selon lequel le premier dispositif formant terminal (1) est un appareil de téléphone à fréquences musicales.
